# FASCICULE DE BREVET EUROPEEN

(11) **EP 2 708 102 B1**
(45) Date de publication et mention de la délivrance du brevet: **31.08.2016**
(21) Numéro de dépôt: 13184486.2
(22) Date de dépôt: 16.09.2013
(51) Int. Cl.: A01B 49/02, A01B 73/00

(54) **Combinaison d'un instrument agricole et d'un appareil remorqué attelée à l'arrière d'un tracteur**
Kombination aus einem landwirtschaftlichen Werkzeug und einem gezogenen Geräts, die hinten an einem Traktor angekuppelt ist
Combination of an agricultural tool and a towed device coupled to the rear of a tractor

(30) Priorité: 18.09.2012 FR 1258730
(43) Date de publication de la demande: 19.03.2014
(73) Titulaire: Kuhn-Huard S.A., 44142 Châteaubriant (FR)
(72) Inventeur: Toublanc, Sylvain, 44110 Chateaubriant (FR); Favrie, Laurent, 49520 Le Tremblay (FR); Herault, Vincent, 44470 Mauves sur Loire (FR)
(74) Mandataire: Esch, Esther Evelyne

(56) Documents cités:
- EP-A1- 0 560 319
- WO-A1-95/34195
- DE-A1- 3 710 023
- GB-A- 950 531

## Description

La présente invention se rapporte au domaine technique général du machinisme agricole. L'invention concerne une combinaison de machines formée d'un instrument agricole et d'un appareil remorqué, ladite combinaison étant attelée à l'arrière d'un tracteur, l'instrument agricole étant disposé sensiblement dans le prolongement dudit tracteur, l'action de l'appareil remorqué étant postérieure à celle de l'instrument agricol et l'appareil remorqué agissant au moin partiellement sur la bande de terme travaillée au passage précédent par l'instrument agricole.

Une combinaison de machines agricoles est connue et décrite dans le document EP 0 560 319. La combinaison est formée d'un instrument tel qu'une charrue et d'un appareil remorqué tel qu'un rouleau. La charrue s'étend sensiblement dans le prolongement du tracteur. Le rouleau est disposé à l'arrière de la charrue et est relié au bâti de la charrue au moyen d'un bras de traction. La charrue étant réversible, la liaison du bras de traction au bâti est pivotante avec un axe de rotation dirigé dans la direction du labour. Le rouleau embarqué sur la charrue permet d'affiner la structure grossière du sol après le labour et de refermer le sol par compactage pour conserver l'humidité dans le sol. Le degré d'émottage et de compactage du sol sera obtenu en fonction du type de rouleau utilisé et de la consistance du sol. L'action du rouleau est postérieure, elle s'exerce sur la bande qui vient d'être retournée par la charrue. Le rouleau s'étend à l'arrière de la charrue et notamment dans son prolongement. Le rouleau est placé directement derrière le dernier corps de la charrue. Le rouleau est disposé perpendiculairement par rapport à la direction d'avance. L'association du rouleau et de la charrue supprime un passage de préparation du futur lit de semence. Comme le rouleau est embarqué sur le bâti de la charrue, le bâti doit être renforcé pour supporter le poids supplémentaire du rouleau et permettre une utilisation et/ou un déplacement en sécurité.

Sur d'autres charrues connues, il est prévu de fixer le rouleau avec son bras de traction sur l'avant-train de la charrue. Pour palier à ce poids supplémentaire à supporter, l'avant-train de la charrue doit être redimensionné. Dans la plupart des cas, il n'est donc pas recommandé d'associer un rouleau embarqué à une charrue de série. En effet lors de la conception d'une telle charrue, la structure n'a été dimensionnée pour pouvoir supporter les contraintes supplémentaires dues à l'association d'un rouleau embarqué.

Une combinaison de machines agricoles comportant les caractéristiques du préambule de la revendication 1 est connue par WO-A-9534195. La présente invention a pour but de remédier aux inconvénients précités et vise à proposer une combinaison utilisant un instrument agricole et un appareil remorqué sans que l'instrument agricole nécessite d'adaptation particulière.

Conformément à l'invention, la combinaison de machines est remarquable en ce que l'appareil remorqué est lié directement au tracteur et que l'instrument agricole est lié à l'appareil remorqué. Grâce à l'invention, la structure de l'instrument agricole n'est pas sollicitée davantage lorsqu'un appareil remorqué lui est associé. La structure de l'instrument agricole n'a pas besoin d'être modifiée, ni renforcée puisque c'est l'appareil remorqué qui est amené à porter l'instrument agricole. En présence d'une combinaison selon l'invention, n'importe quel appareil remorqué pourra être associé à l'instrument agricole pour effectuer des opérations distinctes.

D'autres caractéristiques et avantages de l'invention se dégageront de la description qui suit en regard des dessins annexés qui ne sont donnés qu'à titre d'exemples non limitatifs de l'invention. Sur ces dessins :
- la **figure 1** est une vue de dessus d'un exemple de réalisation d'une combinaison selon l'invention, d'un instrument agricole dans une position de travail et d'un appareil remorqué dans une position active, attelée à un tracteur,
- la **figure 2** est une vue de dessus de l'instrument agricole dans une position de travail et de l'appareil remorqué dans une position inactive,
- la **figure 3** est une vue en perspective arrière de l'appareil remorqué dans une position inactive,
- la **figure 4** représente une vue arrière de la combinaison dans une position de transport.

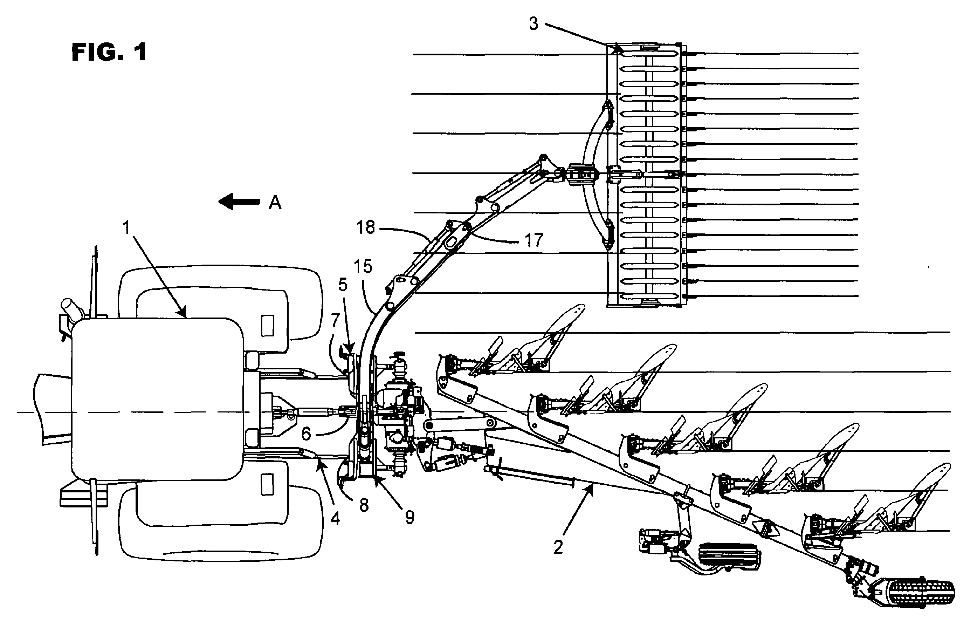

La figure 1 montre une combinaison de machines attelée à l'arrière d'un tracteur (1) et formée d'un instrument agricole (2) et d'un appareil remorqué (3). Le tracteur (1) est capable de déplacer l'instrument agricole (2) et l'appareil remorqué (3) dans le champ ou sur la route suivant une direction d'avance indiquée par la flèche (A). L'instrument agricole (2) est disposé au moins sensiblement dans le prolongement dudit tracteur (1). L'action de l'appareil remorqué (3) est postérieure à l'action de l'instrument agricole (2). L'instrument agricole (2) et l'appareil remorqué (3) sont des machines agricoles différentes. La combinaison ou l'association de plusieurs machines agricoles permet de réaliser plusieurs opérations distinctes avec un seul passage du tracteur. En réalisant plusieurs opérations simultanément, des économies de temps et de carburant sont réalisées. Un tassement de la terre par les roues du tracteur (1) lors d'un deuxième passage est également évité. Dans la combinaison représentée à la figure 1, l'instrument agricole (2) est dans une position de travail et l'appareil remorqué (3) est dans une position active. L'appareil remorqué (3) est destiné à agir sur la bande de terre travaillée au passage précédent par l'instrument agricole (2). Ainsi, l'appareil remorqué (3) s'étend latéralement par rapport au tracteur (1) et à l'instrument agricole (2). L'appareil remorqué (3) s'étend perpendiculairement par rapport à la direction d'avance (A). Sur cette figure, l'instrument agricole (2) est une charrue et l'appareil remorqué (3) est un rouleau. La fonction de la charrue est de couper et retourner la terre et le rôle du rouleau est d'affiner la structure grossière du sol après le labour et de refermer le sol par compactage pour conserver l'humidité dans le sol. Les sillons de labour fait par la charrue sont représentés schématiquement par des traits. Les traces laissées par le rouleau sont représentées schématiquement par des traits plus rapprochés. Le rouleau passe sur les sillons de labour laissés au passage précédent. Dans une alternative non représentée, l'appareil remorqué (3) est disposé pour agir sur des bandes de labour du passage précédent et sur des bandes de labour qui viennent d'être retournées. L'action du rouleau est également postérieure, elle est réalisée après le labour. Ainsi, le rouleau est placé par exemple entre le deuxième et le troisième corps de labour. Dans ce cas, le rouleau agit sur les bandes de labour issues des deux premiers corps de labour et des bandes du passage précédent.

Selon une importante caractéristique de l'invention, l'appareil remorqué (3) agit au moins partiellement sur la bande de terre travaillée au passage précédent par l'instrument agricole (2), l'appareil remorqué (3) est lié directement au tracteur (1) et l'instrument agricole (2) est lié à l'appareil remorqué (3). De cette façon, la structure de l'instrument agricole (2) n'est pas sollicitée davantage lorsqu'un appareil remorqué (3) lui est associé. En présence d'une combinaison de machines agricoles selon l'invention, l'instrument agricole (2) ne supporte pas l'appareil remorqué (3) puisque celui-ci est lié directement au tracteur (1). Ainsi, aucune modification n'est à prévoir pour l'instrument agricole (2) et notamment par rapport à sa structure. L'instrument agricole (2) de la combinaison est un instrument agricole standard. L'action de l'appareil remorqué (3) est simultanée à celle de l'instrument agricole (2), car elles sont réalisées durant un même passage du tracteur. L'action de l'appareil remorqué (3) est postérieure à celle de l'instrument agricole (2) puisque l'appareil remorqué (3) agit au moins partiellement sur la bande de terre travaillée au passage précédent par l'instrument agricole (2). L'appareil remorqué (3) agit sur une bande de terre qui est décalée latéralement.

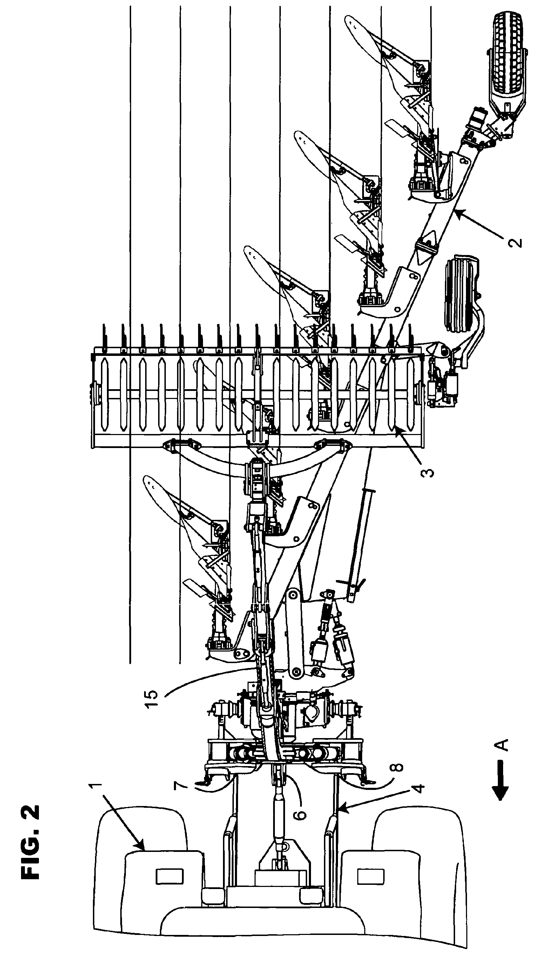

La figure 2 montre que l'instrument agricole (2) est dans une position de travail et l'appareil remorqué (3) est dans une position inactive. La combinaison de machines peut se trouver dans cette configuration par exemple au premier passage dans le champ ou pour que l'appareil remorqué (3) puisse éviter un obstacle. Lorsque l'appareil remorqué (3) est dans cette position, ce dernier ne gêne pas le travail de l'instrument agricole (2).

L'appareil remorqué (3) présente un dispositif d'accouplement (5) destiné à être lié au système d'attelage (4) trois points du tracteur (1). Le système d'attelage (4) trois points présente un point supérieur d'attelage (6) et deux points inférieurs d'attelage (7 et 8). Ces points d'attelage (6, 7, 8) permettent d'accrocher le dispositif d'accouplement (5) de l'appareil remorqué (3). Le système d'attelage (4) comporte à cet effet, une barre supérieure et deux barres inférieures. Le point d'attelage supérieur (6) s'étend dans le plan vertical médian du tracteur (1) et les deux points d'attelage inférieurs (7 et 8) s'étendent en dessous du point d'attelage supérieur (6) et de part et d'autre du plan vertical médian.

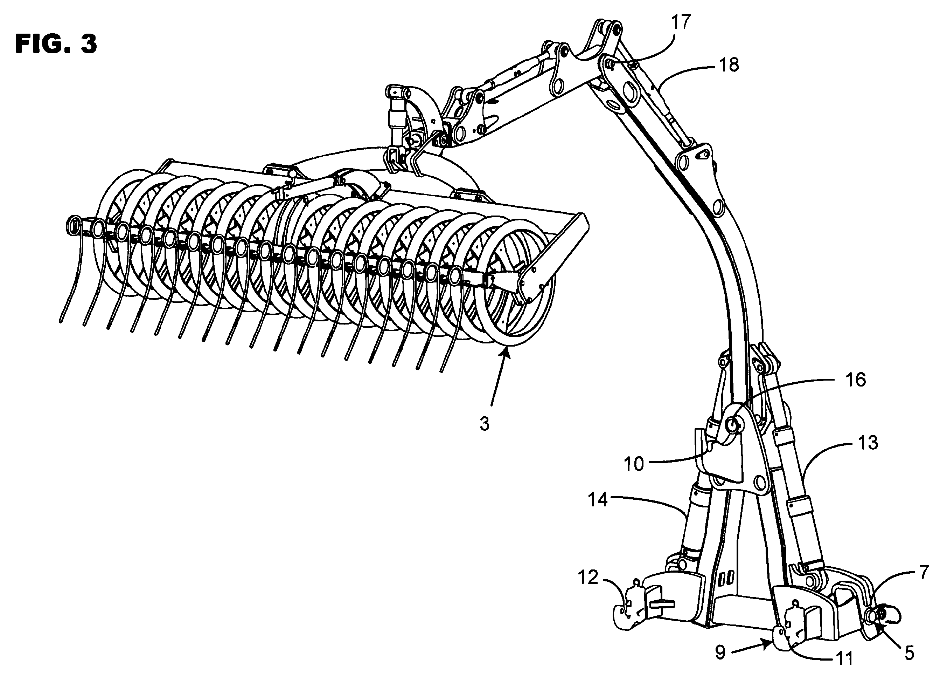

Selon l'invention, l'instrument agricole (2) est attelé à l'arrière de l'appareil remorqué (3). D'après les figures, l'instrument agricole (2) est attelé à l'arrière du dispositif d'accouplement (5) de l'appareil remorqué (3). Le dispositif d'accouplement (5) porte l'instrument agricole (2) au moyen d'un triangle de suspension (9). A la lumière de la figure 3, le triangle de suspension (9) présente une attache supérieure (10) et deux attaches inférieures (11 et 12). Les attaches inférieures (11 et 12) sont situées à un même niveau par rapport au sol et à une certaine distance l'un de l'autre. L'attache supérieure (10) s'étend dans le plan vertical médian du tracteur (1) et les deux attaches inférieures (11 et 12) s'étendent en dessous de l'attache supérieure (10) et de part et d'autre du plan vertical médian. Les attaches (10, 11 et 12) composent un attelage trois points classique susceptible de porter un instrument agricole (2) du type porté.

La figure 1 représente la combinaison de machines dans une configuration de travail. L'instrument agricole (2) s'étend à l'arrière et dans le prolongement du tracteur (1) et l'appareil remorqué (3) est décalé latéralement. L'appareil remorqué (3) est décalé par rapport à l'instrument agricole (2) et par conséquent aussi décalé par rapport au tracteur (1). Ainsi, l'appareil remorqué (3) agit sur toute ou partie de la bande de terre travaillée par l'instrument agricole (2) au passage précédent. D'une manière avantageuse, la position de l'appareil remorqué (3) est réglable par rapport à la position de l'appareil agricole (2). La position latérale comme la position dans la direction d'avance sont réglables et adaptables en fonction des travaux à effectuer.

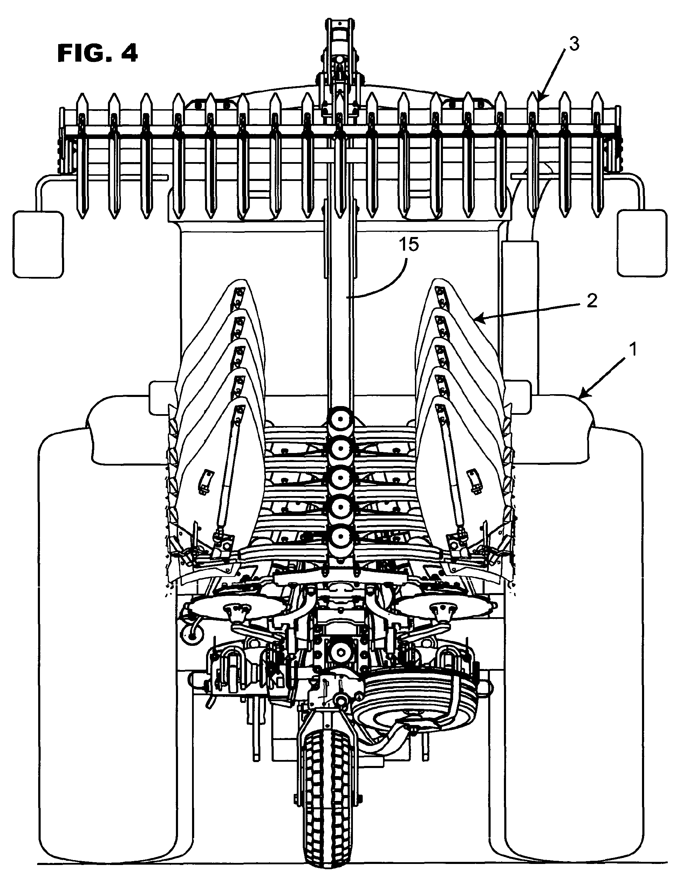

Pour le transport, l'appareil remorqué (3) s'étend sensiblement au-dessus de l'instrument agricole (2) et est placé dans le prolongement derrière le tracteur (1). La figure 4 montre la combinaison de machines dans la configuration de transport selon une vue arrière. On remarque que l'instrument agricole (2) et l'appareil remorqué (3) s'étendent dans le gabarit routier en respectant la largeur et la hauteur maximum autorisé. Pour passer d'une position de travail à une position de transport et inversement, l'appareil remorqué (3) présente au moins un actionneur (13). L'actionneur (13) permet à l'appareil remorqué (3) de s'escamoter, dès que nécessaire, sans influencer le travail de l'instrument agricole (2). L'appareil remorqué (3) est lié au dispositif d'accouplement (5) au moyen d'un bras de traction (15). Le bras de traction (15) est fixé au dispositif d'accouplement (5) via une articulation principale (16) d'axe sensiblement parallèle au plan vertical médian. L'articulation principale (16) s'étend au-dessus du triangle de suspension (9) et plus particulièrement au-dessus de l'attache supérieure (10). L'actionneur (13) permet au bras de traction (15) et donc à l'appareil remorqué (3) de passer de la position active de la figure 1 à la position inactive de la figure 2. Au travail, l'outil remorqué (3) s'étend latéralement grâce au bras de traction (15). L'outil remorqué (3) est fixé à l'extrémité arrière du bras de traction (15). Un pivot d'axe sensiblement horizontale et perpendiculaire au plan vertical médian et un actionneur permettent de régler la profondeur de travail de l'outil remorqué (3). Le réglage de la profondeur de travail de l'outil remorqué (3) est indépendant du réglage de la profondeur de travail de l'instrument agricole (2). La position latérale de l'outil remorqué (3) par rapport à l'instrument agricole (2) est également réglable. Dans une alternative, le bras de traction (15) est télescopique. L'extrémité arrière du bras de traction (15) est susceptible de recevoir n'importe quel type d'appareil remorqué. Les actionneurs (13, 14) sont réalisés par exemple par des vérins hydrauliques ou autres organes similaires.

Au transport, l'appareil remorqué (3) s'étend sensiblement au-dessus de l'instrument agricole (2). Pour réduire la hauteur de la combinaison de machines, le bras de traction (15) est réalisé en deux parties. Les deux parties sont liées par une articulation intermédiaire (17) d'axe sensiblement horizontal et perpendiculaire au plan vertical médian. Grâce à cette articulation intermédiaire (17), la partie arrière du bras de traction (15) s'étend sensiblement parallèlement au sol pour le transport. La position de la partie arrière du bras de traction (15) est commandée par un actionneur (18). La figure 3 montre l'outil remorqué (3) dans sa position inactive, lorsque le bras de traction (15) est replié.

Dans l'exemple de réalisation des figures 1 à 4, l'instrument agricole (2) est une charrue et l'appareil remorqué (3) est un rouleau. Dans cet exemple, le rouleau est attelé directement au tracteur (1) et la charrue est reliée au rouleau. La charrue représentée est une charrue réversible. Ainsi, la charrue comporte deux séries de corps opposés dont une série est dans le sol et laboure tandis que l'autre ne travaille pas. La charrue passe d'une position de travail à l'autre par une rotation de 180°. La charrue représentée possède cinq paires de corps de labour. Elle s'appuie au sol via une roue pour le transport (fig.4). Dans le cas d'une charrue avec quatre paires de corps de labour, la charrue est aussi portée au transport. Pour s'adapter à la charrue réversible, le rouleau est alternativement placé à droite puis à gauche de la charrue en pivotant autour de l'articulation principale (16). Le bras de traction (15) passe d'une position à droite à une position à gauche au moyen de deux actionneurs (13, 14). Un actionneur (13, 14) étant placé de part et d'autre de l'articulation principale (16). Le rouleau représenté comporte un bâti avec des disques. Il sectionne les mottes et tasse le labour en profondeur. Un autre rouleau comporte des spirales pour fractionner et rappuyer le labour. L'action du rouleau peut être complétée par un dispositif de nivellement. Le pivotement de l'appareil remorqué (3) est indépendant du retournement de la charrue.

Dans une alternative, le pivotement ou retournement du rouleau est tributaire de celui de la charrue.

Selon un autre exemple de réalisation non représenté, l'instrument agricole (2) est une charrue et l'appareil remorqué (3) est un semoir, l'action du semoir étant postérieure à celle de la charrue. Dans une alternative, l'instrument agricole (2) est une machine de travail du sol et l'appareil remorqué (3) est un semoir, il s'agit aussi de machines dont les actions sont successives. Pour que le semis puisse être effectué dans de bonnes conditions, le lit de semence doit être bien préparé. L'action du semoir est postérieure à celle de la machine de travail du sol.

Avec la combinaison de machines selon l'invention, n'importe quel instrument agricole (2) peut être associé à n'importe quel appareil remorqué (3) à condition que les tâches effectuées par ces machines s'enchainent de manière logique et que la tâche postérieure puisse être réalisée de manière décalée. Ainsi, il serait envisageable de combiner un semoir en tant qu'instrument agricole (2) et un épandeur d'engrais ou pulvérisateur en tant qu'appareil remorqué (3).

Il est bien évident que l'invention n'est pas limitée aux modes de réalisation décrits ci-dessus et représentés sur les dessins annexés. Des modifications restent possibles sans pour autant sortir du domaine de protection tel qu'il est défini par les revendications suivantes.

## Revendications

1. Combinaison de machines attelée à l'arrière d'un tracteur (1) et formée d'un instrument agricole (2) et d'un appareil remorqué (3), l'instrument agricole (2) étant disposé sensiblement dans le prolongement dudit tracteur (1) et l'action de l'appareil remorqué (3) étant postérieure à celle de l'instrument agricole (2), l'appareil remorqué (3) agisant au moins moins partiellement sur la bande de terre travaillée au passage précédent par l'instrument agricole (2), ***caractérisée en ce que*** l'appareil remorqué (3) est lié directement au tracteur (1) et que l'instrument agricole (2) est lié à l'appareil remorqué (3).

2. Combinaison selon la revendication 1, ***caractérisée en ce que*** l'appareil remorqué (3) présente un dispositif d'accouplement (5) destiné à être lié au système d'attelage (4) trois points du tracteur (1).

3. Combinaison selon la revendication 2, ***caractérisée en ce que*** l'instrument agricole (2) est attelé à l'arrière du dispositif d'accouplement (5) de l'appareil remorqué (3).

4. Combinaison selon la revendication 2 ou 3, ***caractérisée en ce que*** ledit dispositif d'accouplement (5) porte l'instrument agricole (2) au moyen d'un triangle de suspension (9) présentant un mécanisme d'accouplement supérieur (10) et deux mécanismes d'accouplement inférieurs (11 et 12) situés à un même niveau et à une certaine distance l'un de l'autre.

5. Combinaison selon l'une quelconque des revendications 1 à 4, ***caractérisée en ce que*** dans sa position active l'appareil remorqué (3) est destiné à agir sur la bande de terre travaillée au passage précédent par rapport à l'instrument agricole (2) et que dans sa position inactive l'appareil remorqué (3) s'étend sensiblement au-dessus de l'instrument agricole (2).

6. Combinaison selon l'une quelconque des revendications 1 à 5, ***caractérisée en ce qu***'au moins un actionneur (13) permet à l'appareil remorqué (3) de passer d'une position inactive à une position active, et inversement.

7. Combinaison selon l'une quelconque des revendications 1 à 6, ***caractérisée en ce que*** l'appareil remorqué (3) est lié audit dispositif d'accouplement (5) au moyen d'un bras de traction (15).

8. Combinaison selon la revendication 7, ***caractérisée en ce que*** ledit bras de traction (15) est lié audit dispositif d'accouplement (5) au moyen d'une articulation principale (16) d'axe sensiblement horizontal et parallèle au plan vertical médian.

9. Combinaison selon la revendication 8, ***caractérisée en ce que*** l'articulation principale (16) s'étend sensiblement au-dessus du mécanisme d'accouplement supérieur (10) du triangle de suspension (9).

10. Combinaison selon l'une quelconque des revendications 1 à 9, ***caractérisée en ce que*** l'instrument agricole (2) est une charrue et que l'appareil remorqué (3) est un rouleau.

11. Combinaison selon la revendication 10, ***caractérisée en ce que*** le pivotement de l'appareil remorqué (3) est indépendant du retournement de la charrue.

## Patentansprüche

1. Maschinenzusammensetzung, die hinter einen Traktor (1) angekuppelt und aus einem landwirtschaftlischem Gerät (2) und einer Anhängemaschine (3) gebildet ist, wobei sich das landwirtschaftlische Gerät (2) im Wesentlichen in der Verlängerung des Traktors (1) erstreckt und die Wirkung der Anhängemaschine (3) nach der Wirkung des landwirtschaftlichen Geräts (2) eintritt, wobei die Anhängemaschine (3) mindestens teilweise auf den durch das landwirtschaftliche Gerät (2) bei der vorhergehenden Durchfahrt bearbeiteten Erdestreifen einwirkt, ***dadurch gekennzeichnet,* dass** die Anhängemaschine (3) direkt mit dem Traktor (1) verbunden ist und, dass das landwirtschaftliche Gerät (2) mit der Anhängemaschine (3) verbunden ist.

2. Maschinenzusammensetzung nach Anspruch 1, ***dadurch gekennzeichnet,* dass** die Anhängemaschine (3) mit einer Kupplungsvorrichtung (5) versehen ist, die dazu bestimmt ist, mit der Dreipunktkupplungsvorrichtung (4) des Traktors (1) verbunden zu werden.

3. Maschinenzusammensetzung nach Anspruch 2, ***dadurch gekennzeichnet,* dass** das landwirtschaftliche Gerät (2) an das Hinterteil der Kupplungsvorrichtung (5) der Anhängemaschine (3) angekuppelt ist.

4. Maschinenzusammensetzung nach Anspruch 2 oder 3, ***dadurch gekennzeichnet,* dass** die Kupplungsvorrichtung (5) das landwirtschaftlische Gerät (2) mittels eines Aufhängungsdreiecks (9) mit einem oberen Kupplungsmechanismus (10) und zwei unteren Kupplungsmechanismen (11 und 12), die sich auf gleicher Höhe und in einem gewissen Abstand voneinander erstrecken, trägt.

5. Maschinenzusammensetzung nach irgend einem der Ansprüche 1 bis 4, ***dadurch gekennzeichnet*, dass** die Anhängemaschine (3) in ihrer aktiven Stellung dazu bestimmt ist, auf den durch das landwirtschaftliche Gerät (2) bei der vorhergehenden Durchfahrt bearbeiteten Erdestreifen einzuwirken und, dass sich in ihrer stillstehenden Stellung die Anhängemaschine (3) im Wesentlichen über dem landwirtschaftlichen Gerät (2) erstreckt.

6. Maschinenzusammensetzung nach irgend einem der Ansprüche 1 bis 5, ***dadurch gekennzeichnet*, dass** mindestens ein Betätigungselement (13) es der Anhängemaschine (3) gestattet, von einer stillstehenden Stellung in eine aktive Stellung überzugehen, und umgekehrt.

7. Maschinenzusammensetzung nach irgend einem der Ansprüche 1 bis 6, ***dadurch gekennzeichnet*, dass** die Anhängemaschine (3) mit der Kupplungsvorrichtung (5) mittels eines Lenkers (15) verbunden ist.

8. Maschinenzusammensetzung nach Anspruch 7, ***dadurch gekennzeichnet*, dass** der Lenker (15) mittels eines Hauptgelenks (16) mit einer im Wesentlichen horizontalen und zur vertikalen Mittelebene parallelen Achse mit der Kupplungsvorrichtung (5) verbunden ist.

9. Maschinenzusammensetzung nach Anspruch 8, ***dadurch gekennzeichnet*, dass** das Hauptgelenk (16) sich im Wesentlichen über dem oberen Kupplungsmechanismus (10) des Aufhängungsdreiecks (9) erstreckt.

10. Maschinenzusammensetzung nach irgend einem der Ansprüche 1 bis 9, ***dadurch gekennzeichnet*, dass** es sich bei dem landwirtschaftlichen Gerät (2) um einen Pflug und bei der Anhängemaschine (3) um eine Walze handelt.

11. Maschinenzusammensetzung nach Anspruch 10, ***dadurch gekennzeichnet,* dass** die Schwenkbewegung der Anhängemaschine (3) von der Umdrehung des Pflugs unabhängig ist.

## Claims

1. Combination of machines hitched to the rear of a tractor (1) and formed of an agricultural implement (2) and a trailed implement (3), the agricultural implement (2) being substantially positioned following the said tractor (1) and the action of the trailed implement (3) being subsequent to that of the agricultural implement (2), the trailed implement (3) acting at least partially on the strip of land worked during the previous pass by the agricultural implement (2), ***characterised in* that** the trailed implement (3) is directly connected to the tractor (1) and the agricultural implement (2) is connected to the trailed implement (3).

2. Combination according to claim 1, ***characterised in* that** the trailed implement (3) has a coupling device (5) designed to be connected to the three-point hitching device (4) of the tractor (1).

3. Combination according to claim 2, ***characterised in* that** the agricultural implement (2) is hitched to the rear of the coupling device (5) of the trailed implement (3).

4. Combination according to claim 2 or 3, ***characterised in* that** the said coupling device (5) carries the agricultural implement (2) by means of a suspension triangle (9) having an upper hitching mechanism (10) and two lower hitching mechanisms (11 and 12) situated at the same level and at a certain distance from each other.

5. Combination according to any of the claims 1 to 4, ***characterised in* that** in its active position the trailed implement (3) is designed to act on the strip of land worked during the previous pass relative to the agricultural implement (2) and that in its inactive position the trailed implement (3) extends substantially above the agricultural implement (2).

6. Combination according to any of the claims 1 to 5, ***characterised in* that** at least one actuator (13) enables the trailed implement (3) to switch from an inactive position to an active position and vice versa.

7. Combination according to any of the claims 1 to 6, ***characterised in* that** the trailed implement (3) is connected to the said coupling device (5) by means of a draft arm (15).

8. Combination according to claim 7, ***characterised in* that** the said draft arm (15) is connected to the said coupling device (5) by means of a main articulation (16) with an axis substantially horizontal and parallel to the median vertical plane.

9. Combination according to claim 8, ***characterised in* that** the main articulation (16) extends substantially above the upper hitching mechanism (10) of the suspension triangle (9).

10. Combination according to any of the claims 1 to 9, ***characterised in* that** the agricultural implement (2) is a plough and the trailed implement (3) is a roller.

11. Combination according to claim 10, ***characterised in* that** the swivelling of the trailed implement (3) is independent of the turning of the plough.
